(19) **Europäisches Patentamt / European Patent Office / Office européen des brevets**

(11) **EP 1 492 177 B1**

(12) **EUROPEAN PATENT SPECIFICATION**

(45) Date of publication and mention
of the grant of the patent:
**14.12.2011 Bulletin 2011/50**

(51) Int Cl.:
*H01M 4/131* (2010.01)  *H01M 4/1391* (2010.01)
*H01M 4/525* (2010.01)  *H01M 4/485* (2010.01)

(21) Application number: **04013718.4**

(22) Date of filing: **11.06.2004**

(54) **Positive electrode active material and use thereof**

Positives aktives Elektrodenmaterial und seine Verwendung

Matière active d'électrode positive et son utilisation

(84) Designated Contracting States:
**DE FR**

(30) Priority: **26.06.2003  JP 2003183360**

(43) Date of publication of application:
**29.12.2004  Bulletin 2004/53**

(73) Proprietor: **Toyota Jidosha Kabushiki Kaisha**
**Toyota-shi, Aichi-ken, 471-8571 (JP)**

(72) Inventor: **Kurachi, Saeko**
**Toyota-shi**
**Aichi-ken, 471-8571 (JP)**

(74) Representative: **Kuhnen & Wacker**
**Patent- und Rechtsanwaltsbüro**
**Prinz-Ludwig-Strasse 40A**
**85354 Freising (DE)**

(56) References cited:
**EP-A- 1 117 145    US-A1- 2002 114 995**

- **PATENT ABSTRACTS OF JAPAN vol. 2000, no. 20, 10 July 2001 (2001-07-10) & JP 2001 085006 A (TOYOTA CENTRAL RES & DEV LAB INC), 30 March 2001 (2001-03-30)**
- **PATENT ABSTRACTS OF JAPAN vol. 1998, no. 08, 30 June 1998 (1998-06-30) & JP 10 079250 A (TORAY IND INC), 24 March 1998 (1998-03-24)**
- **PATENT ABSTRACTS OF JAPAN vol. 2000, no. 15, 6 April 2001 (2001-04-06) & JP 2000 348274 A (SHINKO GIJUTSU KENKYUSHO:KK), 15 December 2000 (2000-12-15)**
- **PATENT ABSTRACTS OF JAPAN vol. 018, no. 221 (E-1540), 20 April 1994 (1994-04-20) & JP 06 020691 A (HITACHI MAXELL LTD), 28 January 1994 (1994-01-28)**

**Description**

BACKGROUND OF THE INVENTION

1. Field of the Invention

The present invention relates to a positive electrode active material used in a secondary cell and to a method for manufacturing this material. The present invention also relates to a lithium ion secondary cell having this material. The present invention further relates to a lithium-containing composition that is favorable as the positive electrode active material for a lithium ion secondary cell, for example.

2. Description of the Related Art

It is known that a lithium nickel oxide (typically $LiNiO_2$) can be used as the positive electrode active material for a lithium ion secondary cell. Also, Japanese Laid-Open Patent Application No. H10-69910 discusses the use of a positive electrode active material comprising a lithium nickel oxide represented by a formula in which some of the atoms that make up the lithium nickel oxide are substituted with other atoms in order to enhance the discharge capacity retention (also known as capacity attenuation, capacity retention ratio, etc.) of a secondary cell. Examples of other technical literature published in the past and related to raising the discharge capacity retention include Japanese Laid-Open Patent Applications Nos. 2000-203844, 2001-85006, H10-79250, and 2000-348724, as well as JP-2001-273 900 and EP 1 195 825.

It is generally preferable for a secondary cell that the internal resistance of the cell to be low. This requirement is particularly true in applications that demand the ability to charge and discharge quickly (such as in vehicular secondary batteries). However, the internal resistance of conventional lithium ion secondary cells tended to increase over time and/or through use (repeated cycling).

SUMMARY OF THE INVENTION

It is an object of the present invention to provide a positive electrode active material according to claim 1 capable of constituting a secondary cell in which there is less increase in internal resistance, and a method for manufacturing this material. It is another object of the present invention to provide a lithium ion secondary cell constructed using this positive electrode active material. It is yet another object of the present invention to provide a lithium-containing composition that is favorable as the positive electrode active material for a lithium ion secondary cell and so forth.

The inventors discovered that the stated objects can be achieved by a positive electrode active material in which the property (typically the lithium concentration) of the primary particles varies from one portion to another.

One invention disclosed here relates to a positive electrode active material suitable for secondary cells or batteries. This active material is characterized in that it has as its main component a lithium metal oxide, and the concentration of lithium at the surface portion of the primary particles is lower than the concentration of lithium in the interior of the primary particles.

The phrase "concentration of lithium" here refers to the amount of lithium present with respect to volume. For instance, this can be expressed as the number of lithium atoms contained per unit of volume. In general, if lithium is lost from the sites where it is supposed to be in the crystal structure of the lithium metal oxide (typically by being replaced with another element), there will be a decrease in the lithium concentration. Note that when a lithium ion secondary cell is constructed using any of the positive electrode active materials disclosed herein, the total amount of lithium contained in the entire positive electrode active material provided to that secondary cell (the average lithium concentration of the positive electrode active material) may vary with the charge and discharge of the cell. The "lithium concentration" referred to in the present invention means the lithium concentration when the positive electrode active material is in the state prior to be incorporated in the cell, prior to the first use of the cell, or in the cell discharge state.

From the standpoint of suppressing the increase in internal resistance of a cell, it is preferable for the lithium concentration to be lower at the surface portion of the primary particles. On the other hand, from the standpoint of keeping the total amount of lithium (which relates to cell capacity) contained in the entire positive electrode active material, it is preferable for the lithium concentration in the interior of the primary particles to be higher. It is therefore preferable for the lithium concentration at the surface portion of the primary particles (typically, the outer surface, that is, the outermost portion) to be at least about 10% (more preferably at least about 25%) lower than the lithium concentration in the interior (typically the center part) of the primary particles. The result will be particularly good if the lithium concentration at the surface portion is at least about 50% lower than the lithium concentration in the interior. The lithium concentration at the surface portion of the primary particles may also be substantially zero (that is, a state in which almost no lithium is present at the surface portion).

The range of the above-mentioned surface portion, on average, is preferably to a depth of no more than about 10% (more preferably no more than about 7%, and even more preferably no more than about 5%) of the primary particle diameter from the outer surface of the primary particles. Alternatively, it is preferable for range of the surface portion to be to a depth of no more than about 0.1 $\mu$m from the outer surface of the primary particles. If the range (thickness) of the surface portion extends about this far, it will be easier to strike a good balance between suppressing the increase in internal resistance and ensuring good cell capacity (the total amount of lithium). The thickness of the surface portion is preferably about 0.07 $\mu$m or less, and even more preferably about 0.05 $\mu$m or less. There are no particular restrictions on the lower limit to the thickness of the surface portion, but from the standpoints of ease of manufacture and so forth, at least about 0.005 $\mu$m (a range of depth of at least about 0.005 $\mu$m from the outer surface) is usually good.

Any of the inventions disclosed herein can be applied to a positive electrode active material whose main component is any of various lithium metal oxides, such as lithium nickel oxides, lithium cobalt oxides, and lithium manganese oxides. An example of a particularly favorable application is a positive electrode active material whose main component is a lithium nickel oxide. A favorable example of the material disclosed here is a positive electrode active material substantially constituted by a lithium metal oxide in which the composition of the interior of the above-mentioned primary particles is represented by the following chemical formula (1). This material is favorable as a positive electrode active material for a lithium ion secondary cell or battery, for example.

$$Li_xNi_{1-y}M_yO_2 \qquad (1)$$

In the above formula (1), M can be one or two or more elements selected from the group consisting of Co, Al, Mn, Cr, Fe, B, Ti, Mg, and V. x can be a number that satisfies $0.6 \leq x \leq 1.2$. y can be a number that satisfies $0 \leq y \leq 0.5$. Having x within this range allows the effect of a lower concentration of lithium at the surface portion (typically, the lithium sites of the surface portion are replaced with other elements) to be exhibited better.

Another invention disclosed herein relates to a method for manufacturing a positive electrode active material for a secondary cell. This manufacturing method comprises a step of readying a raw active material whose main component is a lithium metal oxide. The method also comprises a step of bringing this raw active material into contact with a treatment liquid containing a metal other than an alkali metal. This is characterized in that the step of bringing the raw active material into contact with the treatment liquid is carried out such that the concentration of lithium at the surface portion of the primary particles that make up the raw active material becomes lower than the concentration of lithium in the interior of these primary particles.

This manufacturing method yields a positive electrode active material in which the lithium concentration at the surface portion of the primary particles is lower than in the interior. Using this positive electrode active material makes it possible to construct a secondary cell or battery (typically a lithium ion secondary cell or battery) with which there is less increase in internal resistance over time and/or with use. This manufacturing method is a favorable method for manufacturing any of the positive electrode active materials disclosed herein.

Typically, the step of contacting with the treatment liquid results in the desorption (removal) of at least part of the lithium at the surface portion of the primary particles that make up the raw active material. This lowers the lithium concentration at the surface portion of the primary particles below that prior to treatment, and allows the manufacture of a positive electrode active material in which the concentration of lithium at the surface portion of the primary particles is lower than in the interior. This treatment of the raw active material is preferably carried out such that the lithium concentration at the surface portion of the primary particles will be at least about 10% (more preferably at least about 25%, and even more preferably at least about 50%) lower than the concentration in the interior. The thickness of the surface portion, on average, is preferably to a depth of no more than about 10% (more preferably no more than about 7%, and even more preferably no more than about 5%) of the primary particle diameter from the outer surface of the primary particles. Alternatively, it is preferable for the treatment to be such that the range is to a depth of no more than about 0.1 $\mu$m (typically about 0.005 to 0.1 $\mu$m) from the outer surface of the primary particles, and it is more preferable for the treatment to be such that the range is no more than about 0.05 $\mu$m (typically about 0.005 to 0.05 $\mu$m). The step of contacting with the treatment liquid is preferably carried out such that an amount of lithium equivalent to approximately 0.1 to 10 mol% of the lithium contained in the raw active material is eluted into the treatment liquid.

The above-mentioned treatment liquid typically contains a metal other than an alkali metal and/or boron. For example, a treatment liquid containing one or two or more elements selected from the group consisting of Al, Ni, Co, Mn, Cr, Fe, V, Mg, Ti, Zr, Nb, Mo, W, Cu, Zn, Ga, In, Sn, La, Ce, and B, typically in the form of an ion (may be a complex ion), can be used. Preferable examples of the element contained in the treatment liquid include one or two or more selected from the group consisting of Al, Ni, Co, Mn, Cr, Fe, and V. It is preferable to use a treatment liquid (typically an aqueous solution) comprising a nitrate, chloride, bromide, acetate, carbonate, sulfate, or the like of one or two or more of these elements dissolved in a suitable solvent (typically water). A treatment liquid which dissolves a nitrate and/or a chloride of a metal other than an alkali metal is particularly favorable.

The use of an alkaline treatment liquid is preferable in the treatment of the raw active material, and it is even better to use a treatment liquid whose pH is between about 8 and 14. A treatment liquid with a pH in this range will have a milder action on the raw active material (such as its action of eluting the lithium contained in the raw active material) than a treatment liquid with a lower pH. This is advantageous from the standpoint of controlling the extent of the treatment of the raw active material (such as how much the lithium concentration is decreased in the surface portion, and the thickness of the surface portion). For instance, it will be easy to avoid such situations as an excessive decrease in the lithium concentration in the interior of the primary particles (which results in a decrease in the capacity of the cell produced using this positive electrode active material) caused by too much treatment of the raw active material. A treatment liquid may contain a known buffer to adjust the pH of the treatment liquid to within the above range.

A favorable example of the raw active material used here has as its main component a lithium metal oxide represented by the following chemical formula (1):

$$Li_xNi_{1-y}M_yO_2 \qquad (1)$$

In the above formula (1), M can be one or two or more elements selected from the group consisting of Co, Al, Mn, Cr, Fe, B, Ti, Mg, and V. x can be a number that satisfies $0.6 \leq x \leq 1.2$. y can be a number that satisfies $0 \leq y \leq 0.5$. Using this raw active material to conduct any of the manufacturing methods disclosed herein is an example of a favorable method for manufacturing a positive electrode active material in which the composition of the lithium metal oxide that constitutes the interior of the primary particles is represented by the above formula (1) and the lithium concentration at the surface portion of these primary particles is lower than the lithium concentration in the interior of the primary particles. A positive electrode active material manufactured in this manner can be favorable as the positive electrode active material for a lithium ion secondary cell or the like.

Another invention disclosed herein relates to a cell comprising any of the above-mentioned positive electrode active materials ,or a positive electrode active material obtained by any of the above-mentioned manufacturing methods. A typical example of such a cell is a lithium ion secondary cell constructed using a positive electrode having this active material. Because it has a positive electrode containing any of the above-mentioned active materials, this secondary cell is excellent in terms of suppressing the increase in internal resistance of a cell over time and/or through use.

Yet another invention disclosed herein relates to a lithium-containing composition (lithium metal oxide) used for the positive electrode active material of a lithium ion secondary cell or battery. This composition is characterized by satisfying both of the following conditions (a) and (b).

(a) The composition of the interior of the primary particles is represented by the following chemical formula (1).

$$Li_xNi_{1-y}M_yO_2 \qquad (1)$$

In the above formula (1), M can be one or two or more elements selected from the group consisting of Co, Al, Mn, Cr, Fe, B, Ti, Mg, and V. x can be a number that satisfies $0.6 \leq x \leq 1.2$. y can be a number that satisfies $0 \leq y \leq 0.5$.
(b) Within a range of no more than $0.02 \mu m$ in depth from the outer surface of the primary particles, at least about 25 mol% of the lithium in the composition represented by the above formula (1) is replaced with one or two or more elements selected from the group consisting of Ni, Co, Al, Mn, Cr, Fe, B, Ti, Mn, and V.
Using this composition as a positive electrode active material allows the construction of a lithium ion secondary cell that is excellent in terms of suppressing the increase in internal resistance of a cell over time and/or through use.

With any of the positive electrode active materials disclosed herein, it is possible to construct a secondary cell (typically, the lithium ion secondary cell disclosed herein) with less increase in internal resistance over time and/or through use. The reason for this result is not entirely clear, but one possibility is that the relatively low lithium concentration at the surface portion of the primary particles suppresses undesirable side reactions between the positive electrode active material and the other material that make up the cell (such as a reaction that produces a compound with low conductivity). For instance, places where lithium has been desorbed from the positive electrode active material become active sites when the secondary cell is charged, and reactions (side reactions) between these active sites and electrolyte or the like can produce compounds with low conductivity, but since the lithium concentration at the surface portion of the primary particles is lower with the positive electrode active material of the present invention, these side reactions can be effectively suppressed. As a result, the disconnection of the conductive path of the positive electrode (positive electrode active material) by the low-conductivity compounds that may be produced by such side reactions can be avoided. Meanwhile, since the interior of the primary particles has a higher lithium concentration than does the surface portion, the lithium in the interior ensures adequate cell capacity.

In a favorable example of the positive electrode active material disclosed here, the surface portion of the primary particles has a structure in which at least some (e.g., at least about 10%, and preferably at least about 25%, and even more preferably at least about 50%) of the lithium sites in the crystal structure of the lithium metal oxide that makes up the interior of these primary particles are occupied (replaced) by another element. Substantially all of the lithium sites of the surface portion may be occupied for by the above-mentioned other element (an element other than lithium). This "other element" is preferably one that is less prone to desorption than lithium when the secondary cell (typically a lithium ion secondary cell) constructed using this active material is charged. For example, the above-mentioned other element can be a metal other than an alkali metal and/or boron. This element is preferably one that can form an ion having an ion radius about the same as that of a lithium ion ($Li^+$). Specific examples include one or two or more elements selected from the group consisting of Al, Ni, Co, Mn, Cr, Fe, V, Mg, Ti, Zr, Nb, Mo, W, Cu, Zn, Ga, In, Sn, La, Ce, and B. One or two or more elements selected from the group consisting of Al, Ni, Co, Mn, Cr, Fe, and V are particularly favorable.

DESCRIPTION OF THE PREFERRED EMBODIMENTS

Preferred embodiments of the present invention will now be described in detail. Any technological matters not specifically mentioned in this Specification, but necessary to the implementation of the present invention, can be construed as design matters for a person skilled in the art on the basis of prior art. The present invention can be implemented on the basis of the technological content disclosed in this Specification, and technological common knowledge in the pertinent field.

The technology disclosed herein can be applied to a positive electrode active material (typically a positive electrode active material for a lithium ion secondary cell) whose main component is any of various lithium metal oxides, such as lithium nickel oxides, lithium cobalt oxides, and lithium manganese oxides. The form of this positive electrode active material is not important, but the material is typically in the form of particles (a powder) made up of secondary particles, that is, aggregated primary particles. There are no particular restrictions on the average size of these primary particles. For example, it is favorable for the average size of the primary particles to be between about 0.2 and 3 $\mu$m. The average size of the secondary particles is preferably between about 5 and 100 $\mu$m, with a more preferable range being about 5 to 30 $\mu$m, and an even more preferable range being 7 to 15 $\mu$m. If the average size of the primary particles and/or the secondary particles is too small, it may be difficult to strike a good balance between suppressing the increase in internal resistance and ensuring good cell capacity. On the other hand, if the average size of the primary particles is too large, the charge and/or discharge rate will tend to be slower.

A favorable example of the active material disclosed herein is a positive electrode active material in which the interior of the primary particles is made up of a lithium metal oxide (lithium nickel oxide) represented by the above formula (1). This positive electrode active material and the method of its manufacture will now be described.

This active material can be favorably manufactured by bringing a raw active material whose main component is a lithium nickel oxide represented by the above formula (1) into contact with a treatment liquid containing a metal other than an alkali metal. There are no particular restrictions on the method for manufacturing the raw active material used here. For example, a lithium nickel oxide powder synthesized by a standard liquid phase process can be used. If a relatively large quantity of impurities (compounds other than a lithium nickel oxide, such as substances remaining unreacted (such as lithium carbonate) during the manufacture of the raw active material) is present, some or all of these impurities can be removed by a suitable pretreatment (such as washing with water) prior to bringing the raw active material into contact with the treatment liquid.

The treatment liquid that is brought into contact with the raw active material contains a metal other than an alkali metal (hereinafter also referred to simply as "metal") and/or boron, typically in the form of an ion. Examples of the metal contained in the treatment liquid include Al, Ni, Co, Mn, Cr, Fe, V, Mg, Ti, Zr, Nb, Mo, W, Cu, Zn, Ga, In, Sn, La, and Ce. Preferable examples of the metal include Al, Ni, Co, Mn, Cr, Fe, and V. Of these, one that can form an ion having an ion radius close to that of a lithium ion is preferred. For example, it is preferable to use one that can become an ion having an ion radius equivalent to 70 to 120% (and even more preferably 80 to 120%, and especially 85 to 100%) of the ion radius of a lithium ion. The treatment liquid can contain one or two or more elements listed above (typically in the form of an ion of the element). A treatment liquid containing ions of one or more metals selected from the group consisting of Al, Ni, and Co is particularly favorable. A treatment liquid containing an alkali metal in addition to the elements listed above may also be used.

The treatment liquid can contain nitric acid ions ($NO_3^-$), chlorine ions ($Cl^-$), bromine ions ($Br^-$), acetic acid ions ($CH_3COO^-$), carbonic acid ions ($CO_3^{2-}$), sulfuric acid ions ($SO_4^{2-}$), or the like as counter ions of the above-mentioned metal ions. A treatment liquid such as this can generally be prepared by dissolving the corresponding metal salt in a suitable solvent (such as water). A treatment liquid containing chlorine ions ($Cl^-$) and/or nitric acid ions ($NO_3^-$) as counter ions is preferable.

Because of its simplicity, a method in which the raw active material (typically in the form of a powder) is fed into the treatment liquid and stirred, and the treatment liquid and the active material are then separated (by filtration, etc.) is the preferred method for conducting the step of bringing the raw active material into contact with the treatment liquid. A step of drying the active material, with heating as needed, can be added after the separation. This drying step is best performed at a temperature of approximately 150°C or lower. The concentration of metal contained in the treatment liquid, the amount of treatment liquid and/or metal used with respect to the amount of raw active material, the pH of the treatment liquid, the treatment temperature, the treatment duration, and so forth can be suitably adjusted as dictated by the desired degree of treatment (how much the lithium concentration is decreased in the surface portion of the primary particles, the thickness of the surface portion, etc.). Usually, it is preferable to use a treatment liquid in which the concentration of the metal other than an alkali metal is about 0.005 to 0.5 mol/liter (more preferably about 0.01 to 0.2 mol/liter). The pH of the treatment liquid is preferably about 8 to 14, with a preferred range being about 9 to 12. It is preferable for contacting the treatment liquid which contains a sufficient amount of metal with respect to the lithium in the surface portion of the raw active material. From the standpoints such as ease of operation and energy efficiency, it is usually appropriate for the treatment temperature to be about 10 to 60°C (preferably 15 to 40°C). From the standpoints such as ease of operation and productivity, it is preferable for the treatment duration to be about 0.5 to 6 hours, for example, with about 2 to 3 hours being even better.

A preferred example of the positive electrode active material obtained by this treatment is a positive electrode active material in which the average lithium concentration to a depth of about 0.1 $\mu$m from the outer surface of the primary particles is at least about 10% (and preferably at least about 25%, and more preferably at least about 50%) lower than the lithium concentration further toward the interior. This range of lower lithium concentration (range of the surface portion) is preferably no more than about 10% of the primary particle diameter from the outer surface. It is also preferable for the range to be to a depth of no more than about 0.07 $\mu$m (preferably no more than 0.05 $\mu$m, and even more preferably no more than 0.02 $\mu$m) from the outer surface of the primary particles. That the lithium concentrations in the interior and the surface portion of the primary particles are in this state can be determined by subjecting the surface portion and center portion of the primary particles to X-ray photoelectron spectroscopy (XPS), for example.

Another preferred example of the positive electrode active material is a positive electrode active material in which the lithium concentration at the outer surface of the primary particles is about 25% (preferably at least about 50%) lower than the lithium concentration in the center portion of the primary particles. That the lithium concentrations at the outer surface and in the center portion of the primary particles are in this state can be determined by subjecting the outer surface and center portion of the primary particles to X-ray photoelectron spectroscopy (XPS), for example.

A positive electrode active material such as this can be favorably employed as the positive electrode active material for a lithium ion secondary cell or the like in various modes. The shape of the secondary cell may be either rectangular, cylindrical, or button-shaped, for example. The positive electrode used in this secondary cell can be produced, for example, by applying the above-mentioned positive electrode active material to a positive electrode collector composed of metal or the like, or by mixing this positive electrode active material with a suitable binder or the like and shape the mixture by compression molding. One or more types of negative electrode active material used in conventional lithium ion secondary cells, such as amorphous carbon or graphite carbon, can be used with no particular restrictions for the negative electrode. The electrolyte can also be any one used in conventional lithium ion secondary cells, with no particular restrictions imposed thereon. For instance, this can be a liquid electrolyte obtained by dissolving one or more solute, such as $LiCF_3SO_3$, $LiC_4F_9SO_3$, $LiClO_4$, $LiPF_6$, $LiBF_4$, $LiAsF_6$, $LiN(CF_3SO_2)_2$, or $LiC(CF_3SO_2)_3$, in a solvent contained one or more of propylene carbonate, ethylene carbonate, 1,2-dimethoxyethane, 1,2-diethoxyethane, $\gamma$-butyrolactone, tetrahydrofuran, 1,3-dioxolane, dimethyl carbonate, diethyl carbonate, ethyl methyl carbonate, or the like.

A preferred embodiment of the lithium ion secondary cell constructed using any of the positive electrode active materials disclosed herein comprises a positive electrode sheet produced by applying the positive electrode active material to the surface of a metal foil (used as the positive electrode collector), a negative electrode sheet produced by applying a negative electrode active material to the surface of a metal foil (used as the negative electrode collector), with a separator interposed between these sheets, and this assembly is wound to produce a coiled electrode unit. A lithium ion secondary cell can be constructed by housing this electrode unit along with electrolyte in a suitable container. Aluminum foil or the like can be used as the positive electrode collector, while copper foil or the like can be used as the negative electrode collector. A porous polyolefin (polyethylene, polypropylene, etc.) sheet can be used as the separator.

Examples

Examples pertaining to the present invention will now be described, but the intention is not to limit the present invention to the specific examples given below.

Example 1: Production of positive electrode active material

Using a raw active material whose main component was a lithium nickel oxide (obtained by a standard liquid phase method) represented by the formula $LiNi_{0.8}Co_{0.15}Al_{0.05}O_2$, a positive electrode active material was produced by performing a treatment in which this raw active material was brought into contact with (immersed in) various types of metal salt solution. This raw active material comprised an agglomeration of primary particles whose average size was approximately 0.5 $\mu$m, which formed secondary particles with an average size of approximately 8 $\mu$m. The specific

surface area of this material was approximately 0.6 m$^2$/g.

Test Example 1

An aqueous solution containing 0.05 mol/liter aluminum nitrate (Al(NO$_3$)$_3$) was prepared. Approximately 500 g of the raw active material was fed into approximately 1 liter of this aqueous solution (treatment liquid) and stirred at a room temperature (of about 25°C). About 3 hours later the active material was filtered off from this treatment liquid and dried for 24 hours at 120°C to obtain a positive electrode active material (1).

Test Example 2

An aqueous solution containing nickel nitrate (Ni(NO$_3$)$_2$) in the same concentration was used instead of the aluminum nitrate aqueous solution used in Test Example 1. Other than this, a positive electrode active material (2) was obtained in the same manner as in Test Example 1.

Test Example 3

An aqueous solution containing cobalt nitrate (Co(NO$_3$)$_2$) in the same concentration was used instead of the aluminum nitrate aqueous solution used in Test Example 1. Other than this, a positive electrode active material (3) was obtained in the same manner as in Test Example 1.

Test Example 4

An aqueous solution containing aluminum chloride (AlCl$_3$) in the same concentration was used instead of the aluminum nitrate aqueous solution used in Test Example 1. Other than this, a positive electrode active material (4) was obtained in the same manner as in Test Example 1.

Test Example 5

An aqueous solution containing nickel chloride (NiCl$_3$) in the same concentration was used instead of the aluminum nitrate aqueous solution used in Test Example 1. Other than this, a positive electrode active material (5) was obtained in the same manner as in Test Example 1.

Test Example 6

An aqueous solution containing cobalt chloride (CoCl$_2$) in the same concentration was used instead of the aluminum nitrate aqueous solution used in Test Example 1. Other than this, a positive electrode active material (6) was obtained in the same manner as in Test Example 1.

The X-ray analysis spectra of the positive electrode active materials (1) to (6) obtained in Test Examples 1 to 6 above were compared with that of the raw active material, which revealed no marked difference between the spectra. This suggests that the crystal structure of the bulk portion (interior) of the primary particles was substantially unchanged by the treatment performed in Test Examples 1 to 6.

After being used to treat the raw active material in Test Example 1, the treatment liquid contained lithium thought to have originated in the lithium nickel oxide (LiNi$_{0.8}$Co$_{0.15}$Al$_{0.05}$O$_2$) constituting the raw active material, in an amount equivalent to approximately 2 mol% of the lithium contained in this oxide prior to treatment. Similarly, the treatment liquid that had been used to treat the raw active materials of Test Examples 2 to 6 and then separated from the active material also contained the lithium in an amount equivalent to approximately 2 to 10 mol% of the lithium contained in the oxide prior to treatment.

Example 2: Production of lithium ion secondary cell

Lithium ion secondary cells were produced as follows, using the positive electrode active materials (1) to (6) obtained in Example 1.

Each of the positive electrode active materials obtained in Test Examples 1 to 6 above, carbon black (CB), and polyvinylidene fluoride (PVDF) were mixed with water to prepare compositions for the production of various positive electrodes. These compositions were in the form of a paste or slurry, and were prepared so as to contain one of the positive electrode active materials (1) to (6), CB, and PVDF in a mass ratio of about 85:10:5, respectively. Both sides of an aluminum foil (positive electrode collector) with a thickness of approximately 15 μm were coated with one of the compositions obtained above, the coating was dried, and this product was then pressed to an overall thickness of approximately 37 $\mu$m. A positive electrode sheet was produced in this manner.

A composition for producing a negative electrode was prepared by mixing carbon black (CB) and polyvinylidene fluoride (PVDF) with water. This composition was in the form of a paste or slurry, and was prepared so as to contain CB and PVDF in a mass ratio of about 90:10, respectively. Both sides of a copper foil (negative electrode collector) with a thickness of approximately 15 $\mu$m were coated with the composition obtained above, the coating was dried, and this product was then pressed to an overall thickness of approximately 37 $\mu$m. A negative electrode sheet was produced in this manner.

These positive electrode sheets and negative electrode sheets were laminated along with two separators (a porous polyethylene sheet was used here), and these laminated sheets were wound to produce a coiled electrode unit. A cylindrical lithium ion secondary cell with a diameter of 18 mm and a height of 65 mm (18650 type) was produced by housing this electrode unit along with electrolyte in a container. The electrolyte can be any electrolyte used in conventional lithium ion secondary cells, for example, with no particular restrictions imposed thereon. The electrolyte used here was produced by dissolving $LiPF_6$ in an amount of 1 mol/liter in a mixed solvent of ethylene carbonate (EC) and diethyl carbonate (DEC) with a volume ratio of 3:7.

Example 3: Performance evaluation

The internal resistance (initial internal resistance) of each of the lithium ion secondary cells obtained in Example 2 was measured by the internal resistance measurement method discussed below. Also, these secondary cells were subjected to a charge-discharge cycling test under the following conditions, after which the internal resistance (post-cycling internal resistance) was measured by the same measurement method. In addition, a lithium ion secondary cell (comparative example) was produced in the same manner as in Example 2 except that the above-mentioned raw active material was used directly (that is, without undergoing the above-mentioned treatment with a treatment liquid containing a metal) as the positive electrode active material, and this cell was similarly measured for initial internal resistance and post-cycling internal resistance.

Internal resistance measurement method

Each cell was charged up to 3.75 V at a constant current of 1000 mA/cm$^2$ and an environment temperature of 25°C, after which constant voltage charging was performed at 3.75 V, and charging was continued until the total charging time reached 1.5 hours. The state of charge (SOC) at this point was approximately 60%. Charge-discharge cycling was then performed in the order of steps (a) to (f) below, and the internal resistance was calculated from the slope of the linear approximation line in a current/voltage graph in which the vertical axis was the voltage after cycling and the horizontal axis was the charge and discharge voltage.

(a) Discharge for 10 seconds at 300 mA/cm$^2$.
(b) Charge for 10 seconds at 300 mA/cm$^2$.
(c) Discharge for 10 seconds at 900 mA/cm$^2$.
(d) Charge for 10 seconds at 900 mA/cm$^2$.
(e) Discharge for 10 seconds at 2700 mA/cm$^2$.
(f) Charge for 10 seconds at 2700 mA/cm$^2$.

Cycling test

Each cell was charged up to 4.1 V at a constant current of with a current density of 2C and at an environment temperature of 60°C, then discharged down to 3.0 V at the same current density. This cycle (charging to 4.1 V and discharging to 3.0 V at a 2C constant current) was repeated 500 times. The letter C here represents the discharge rate. "Current density 2C" means a current density (A) at which a quantity of electricity equivalent to the cell capacity (Ah) can be supplied in 0.5 hour.

The percentage increase in the post-cycling internal resistance versus the initial internal resistance was calculated from the following formula. These results are given in Table 1 along with the types of positive electrode active material used.

$$(\{\text{post-cycling internal resistance}\}/\{\text{initial internal resistance}\}) \times 100 \ (\%)$$

**Table 1**

| Positive electrode active material used | Metal salt | Increase in internal resistance |
| --- | --- | --- |
| Test Example 1 | aluminum nitrate | 2% |
| Test Example 2 | nickel nitrate | 5% |
| Test Example 3 | cobalt nitrate | 7% |
| Test Example 4 | aluminum chloride | 3% |
| Test Example 5 | nickel chloride | 4% |
| Test Example 6 | cobalt chloride | 5% |
| Comparative Example | (no treatment) | 19% |

It is clear from Table 1 that with the lithium ion secondary cells obtained in the Example 2, which were produced using the positive electrode active materials of Examples 1 to 6, the increase in internal resistance resulting from the above-mentioned cycling test was less than 10% in each case (no more than 5% in favorable cases). Compared to the lithium ion secondary cell of the comparative example, which were produced using a positive electrode active material that had not undergone treatment with the above-mentioned treatment liquid (the raw active material), the increase in internal resistance was kept to less than 50% with the lithium ion secondary cells obtained in Example 2.

**Claims**

1. A positive electrode active material suitable for a secondary cell, the active material is formed by primary particles having an interior and a surface portion, and satisfies the following conditions:

    (a) the main component of the interior of the primary particles is a lithium metal oxide whose composition is represented by the following chemical formula (1):

    $$Li_xNi_{1-y}M_yO_2 \qquad (1)$$

    where M is one or two or more elements selected from the group consisting of cobalt, aluminum, manganese, chromium, iron, boron, titanium, magnesium, and vanadium,

    $$0.6 \leq x \leq 1.2,$$

    and

    $$0 \leq y \leq 0.5;$$

    and
    (b) the concentration of lithium at the surface portion of the primary particles is lower than the concentration of lithium in the interior of said primary particles wherein the lithium sites of the surface portion of the primary particles are replaced with a metal other than an alkali metal and/or boron selected from the group consisting of nickel, cobalt, aluminum, manganese, chromium, iron, boron, titanium, magnesium, vanadium, zirconium, niobium, molybdenum, wolfram, copper, zinc, gallium, indium, tin, lanthanum, and cerium.

2. The active material according to Claim 1, wherein the concentration of lithium at the surface portion of the primary particles is no more than 50% of the concentration of lithium in the interior of the primary particles.

3. The active material according to Claim 1, wherein the range of the surface portion is to a depth of no more than 10% of the primary particle diameter from the outer surface of the primary particles.

**4.** The active material according to Claim 1, wherein the range of the surface portion is to a depth of no more than 0.1 μm from the outer surface of the primary particles.

**5.** The active material according to Claim 1, wherein the average size of the primary particles is between 0.2 and 3 μm, and the average size of secondary particles is between 5 and 30 μm.

**6.** A lithium ion secondary cell constructed using a positive electrode having the active material according to Claim 1.

**7.** A method for manufacturing a positive electrode active material suitable for a secondary cell, comprising the steps of:

readying a raw active material whose main component is a lithium metal oxide whose composition is represented by the chemical formula (1):

$$Li_xNi_{1-y}M_yO_2 \qquad (1)$$

where M is one or two or more elements selected from the group consisting of cobalt, aluminum, manganese, chromium, iron, boron, titanium, magnesium, and vanadium,

$$0.6 \leq x \leq 1.2,$$

and

$$0 \leq y \leq 0.5;$$

and
bringing this raw active material into contact with a treatment liquid containing a metal other than an alkali metal and/or boron,
wherein in the step of contacting the raw active material with the treatment liquid the concentration of lithium at the surface portion of the primary particles that make up the raw active material is made lower than the concentration of lithium in the interior of said primary particles and wherein the lithium sites of the surface portion of the primary particles are replaced with a metal other than an alkali metal and/or boron selected from the group consisting of nickel, cobalt, aluminum, manganese, chromium, iron, boron, titanium, magnesium, vanadium, zirconium, niobium, molybdenum, wolfram, copper, zinc, gallium, indium, tin, lanthanum, and cerium contained in the treatment liquid.

**8.** The method according to Claim 7, wherein the pH of the treatment liquid is between 8 and 14.

**9.** The method according to Claim 7, wherein the metal contained in the treatment liquid is a metal that can form an ion having an ion radius equivalent to 70 to 120% of the ion radius of a lithium ion.

**10.** The method according to Claim 7, wherein the treatment liquid contains one or two or more elements selected from the group consisting of nickel, cobalt, aluminum, manganese, chromium, iron, boron, titanium, magnesium, vanadium, zirconium, niobium, molybdenum, wolfram, copper, zinc, gallium, indium, tin, lanthanum, and cerium.

**11.** The method according to Claim 7, wherein the treatment liquid is a solution which dissolves a nitrate and/or a chloride of the metal.

**12.** The method according to Claim 7, wherein in the step of contacting the raw active material with the treatment liquid an amount of lithium equivalent to 0.1 to 10 mol% of the lithium contained in the raw active material is eluted into the treatment liquid.

**13.** The method according to Claim 7, wherein the treatment liquid contains at least one ion of a metal selected from the group consisting of aluminum, nickel, and cobalt.

**14.** A lithium-containing composition suitable for the positive electrode active material of a lithium ion secondary cell, said composition satisfying both of the following conditions:

(a) the composition of the interior of the primary particles is represented by the following chemical formula (1):

$$Li_xNi_{1-y}M_yO_2 \qquad (1)$$

where M is one or two or more elements selected from the group consisting of cobalt, aluminum, manganese, chromium, iron, boron, titanium, magnesium, and vanadium,

$$0.6 \leq x \leq 1.2,$$

and

$$0 \leq y \leq 0.5;$$

and

(b) within a range of no more than 0.02 $\mu$m in depth from the outer surface of the primary particles, at least 25 mol% of the lithium in the composition represented by the above formula (1) is replaced with one or two or more elements selected from the group consisting of nickel, cobalt, aluminum, manganese, chromium, iron, boron, titanium, magnesium, and vanadium.

**Patentansprüche**

1. Eine positive Elektrode bildendes, aktives Material, das für eine Sekundärzelle geeignet ist, wobei das aktive Material aus Primärteilchen mit einem Inneren und einer Oberfläche besteht und die folgenden Bedingungen erfüllt:

(a) der Hauptbestandteil im Inneren der Primärteilchen ist ein Lithiummetalloxid, dessen Zusammensetzung von der folgenden chemischen Formel (I) angegeben wird:

$$Li_xNi_{1-y}M_yO_2 \qquad (1)$$

wobei M für eines oder zwei Elemente steht, die ausgewählt sind aus der Gruppe bestehend aus Cobalt, Aluminium, Mangan, Chrom, Eisen, Bor, Titan, Magnesium und Vanadium,

$$0,6 \leq x \leq 1,2$$

und

$$0 \leq y \leq 0,5;$$

und

(b) die Lithiumkonzentration an der Oberfläche der Primärteilchen niedriger ist als die Lithiumkonzentration im Inneren der Primärpartikel, wobei die Lithiumstellen an der Oberfläche der Primärteilchen durch ein Metall ersetzt sind, bei dem es sich nicht um ein Alkalimetall und/oder um Bor handelt, das ausgewählt ist aus der Gruppe bestehend aus Nickel, Cobalt, Aluminium, Mangan, Chrom, Eisen, Bor, Titan, Magnesium, Vanadium, Zirconium, Niob, Molybdän, Wolfram, Kupfer, Zink, Gallium, Indium, Zinn, Lanthan und Cer.

2. Aktives Material nach Anspruch 1, wobei die Lithiumkonzentration an der Oberfläche der Primärteilchen nicht größer ist als 50 % der Lithiumkonzentration im Inneren der Primärteilchen.

3. Aktives Material nach Anspruch 1, wobei der Bereich der Oberfläche bis zu einer Tiefe von nicht mehr als 10 % des Primärteilchendurchmessers ab der äußeren Oberfläche der Primärteilchen geht.

4. Aktives Material nach Anspruch 1, wobei der Bereich der Oberfläche bis zu einer Tiefe von nicht mehr als 0,1 $\mu$m ab der äußeren Oberfläche der Primärteilchen geht.

5. Aktives Material nach Anspruch 1, wobei die Durchschnittsgröße der Primärteilchen zwischen 0,2 und 3 $\mu$m liegt, und die Durchschnittsgröße von Sekundärteilchen zwischen 5 und 30 $\mu$m liegt.

6. Lithiumionen-Sekundärzelle, die unter Verwendung einer positiven Elektrode mit dem aktiven Material gemäß Anspruch 1 aufgebaut ist.

7. Verfahren zum Herstellen eines eine positive Elektrode bildenden, aktiven Materials, das für eine Sekundärzelle geeignet ist, die folgenden Schritte umfassend:

   Bereitstellen eines aktiven Rohmaterials, dessen Hauptbestandteil ein Lithiummetalloxid ist, dessen Zusammensetzung von der folgenden chemischen Formel (I) angegeben wird:

   $$Li_xNi_{1-y}M_yO_2 \qquad (1)$$

   wobei M für eines oder zwei Elemente steht, die ausgewählt sind aus der Gruppe bestehend aus Cobalt, Aluminium, Mangan, Chrom, Eisen, Bor, Titan, Magnesium und Vanadium,

   $$0,6 \leq x \leq 1,2$$

   und

   $$0 \leq y \leq 0,5;$$

   und
   Inkontaktbringen dieses aktiven Rohmaterials mit einer Behandlungsflüssigkeit, die ein Metall enthält, bei dem es sich nicht um ein Alkalimetall und/oder um Bor handelt,
   wobei im Schritt des Inkontaktbringens des aktiven Rohmaterials mit der Behandlungsflüssigkeit die Lithiumkonzentration an der Oberfläche der Primärteilchen, aus denen das aktive Rohmaterial besteht, unter die Lithiumkonzentration im Inneren der Primärteilchen gesenkt wird, und wobei die Lithiumstellen an der Oberfläche der Primärteilchen durch ein Metall ersetzt werden, bei dem es sich nicht um ein Alkalimetall und/oder um Bor handelt, das ausgewählt ist aus der Gruppe bestehend aus Nickel, Cobalt, Aluminium, Mangan, Chrom, Eisen, Bor, Titan, Magnesium, Vanadium, Zirconium, Niob, Molybdän, Wolfram, Kupfer, Zink, Gallium, Indium, Zinn, Lanthan und Cer und das in der Behandlungslösung enthalten ist.

8. Verfahren nach Anspruch 7, wobei der pH der Behandlungsflüssigkeit zwischen 8 und 14 liegt.

9. Verfahren nach Anspruch 7, wobei das Metall, das in der Behandlungsflüssigkeit enthalten ist, ein Metall ist, das ein Ion mit einem Ionenradius bilden kann, der 70 bis 120 % des Ionenradius eines Lithiumions entspricht.

10. Verfahren nach Anspruch 7, wobei die Behandlungsflüssigkeit eines oder zwei Elemente enthält, die ausgewählt sind aus der Gruppe bestehend aus Nickel, Cobalt, Aluminium, Mangan, Chrom, Eisen, Bor, Titan, Magnesium, Vanadium, Zirconium, Niob, Molybdän, Wolfram, Kupfer, Zink, Gallium, Indium, Zinn, Lanthan und Cer.

11. Verfahren nach Anspruch 7, wobei die Behandlungsflüssigkeit eine Lösung ist, die ein Nitrat und/oder ein Chlorid des Metalls löst.

12. Verfahren nach Anspruch 7, wobei im Schritt des Inkontaktbringens des aktiven Rohmaterials mit der Behandlungsflüssigkeit eine Lithiummenge, die 0,1 bis 10 Mol% des Lithiums entspricht, das in dem aktiven Rohmaterial enthalten ist, in die Behandlungsflüssigkeit eluiert wird.

13. Verfahren nach Anspruch 7, wobei die Behandlungsflüssigkeit zumindest ein Ion eines Metalls enthält, das ausgewählt ist aus der Gruppe bestehend aus Aluminium, Nickel und Cobalt.

14. Lithiumzusammensetzung, die sich als positive Elektroden bildendes aktives Material einer Lithiumionen-Sekundärzelle eignet, wobei die Zusammensetzung beide der folgenden Bedingungen erfüllt:

(a) die Zusammensetzung des Inneren der Primärteilchen wird von der folgenden chemischen Formel (1) angegeben:

$$Li_xNi_{1-y}M_yO_2 \qquad (1)$$

wobei M für eines oder zwei Elemente steht, die ausgewählt sind aus der Gruppe bestehend aus Cobalt, Aluminium, Mangan, Chrom, Eisen, Bor, Titan, Magnesium und Vanadium,

$$0,6 \leq x \leq 1,2$$

und

$$0 \leq y \leq 0,5;$$

und
(b) innerhalb eines Bereichs von nicht mehr als 0,02 $\mu$m Tiefe ab der äußeren Oberfläche der Primärteilchen sind mindestens 25 Mol% des Lithiums in der Zusammensetzung, die von der obigen Formel (1) angegeben wird, durch eines oder zwei Elemente ersetzt, die ausgewählt sind aus der Gruppe bestehend aus Nickel, Cobalt, Aluminium, Mangan, Chrom, Eisen, Bor, Titan, Magnesium und Vanadium.

**Revendications**

1. Matière active d'électrode positive appropriée pour une pile secondaire, la matière active est formée par des particules primaires ayant un intérieur et une portion de surface, et satisfait les conditions suivantes :

(a) le constituant principal de l'intérieur des particules primaires est un oxyde de métal de lithium dont la composition est représentée par la formule chimique (1) suivante :

$$Li_xNi_{1-y}M_yO_2 \qquad (1)$$

dans laquelle M est un ou deux ou plusieurs éléments choisis dans le groupe constitué du cobalt, de l'aluminium, du manganèse, du chrome, du fer, du bore, du titane, du magnésium et du vanadium,

$$0,6 \leq x \leq 1,2,$$

et

$$0 \leq y \leq 0,5 ;$$

et
(b) la concentration en lithium à la portion de surface des particules primaires est inférieure à la concentration en lithium dans l'intérieur desdites particules primaires où les sites de lithium de la portion de surface des particules primaires sont remplacés par un métal différent d'un métal alcalin et/ou du bore choisi dans le groupe constitué du nickel, du cobalt, de l'aluminium, du manganèse, du chrome, du fer, du bore, du titane, du magnésium, du vanadium, du zirconium, du niobium, du molybdène, du tungstène, du cuivre, du zinc, du gallium, de l'indium, de l'étain, du lanthane, et du cérium.

2. Matière active selon la revendication 1, dans laquelle la concentration en lithium à la portion de surface des particules primaires est d'au plus 50 % de la concentration en lithium dans l'intérieur des particules primaires.

3. Matière active selon la revendication 1, dans laquelle l'intervalle de la portion de surface va jusqu'à une profondeur d'au plus 10 % du diamètre de particule primaire à partir de la surface externe des particules primaires.

4. Matière active selon la revendication 1, dans laquelle l'intervalle de la portion de surface va jusqu'à une profondeur d'au plus 0,1 $\mu$m à partir de la surface externe des particules primaires.

5. Matière active selon la revendication 1, dans laquelle la taille moyenne des particules primaires est de 0,2 à 3 $\mu$m, et la taille moyenne des particules secondaires est de 5 à 30 $\mu$m.

6. Pile secondaire aux ions lithium construite en utilisant une électrode positive présentant la matière active selon la revendication 1.

7. Procédé de fabrication d'une matière active d'électrode positive appropriée pour une pile secondaire comprenant les étapes :

de préparation d'une matière active brute dont le constituant principal est un oxyde de métal de lithium dont la composition est représentée par la formule chimique (1) :

$$Li_xNi_{1-y}M_yO_2 \qquad (1)$$

où M est un ou deux ou plusieurs éléments choisis dans le groupe constitué du cobalt, de l'aluminium, du manganèse, du chrome, du fer, du bore, du titane, du magnésium et du vanadium,

$$0,6 \leq x \leq 1,2,$$

et

$$0 \leq y \leq 0,5 \,;$$

et
de mise en contact de cette matière active brute avec un liquide de traitement contenant un métal différent d'un métal alcalin et/ou du bore, dans lequel dans l'étape de mise en contact de la matière active brute avec le liquide de traitement, la concentration en lithium à la portion de surface des particules primaires qui constituent la matière active brute est rendue inférieure à la concentration en lithium dans l'intérieur desdites particules primaires et dans lequel les sites de lithium de la portion de surface des particules primaires sont remplacés par un métal différent d'un métal alcalin et/ou du bore choisi dans le groupe constitué du nickel, du cobalt, de l'aluminium, du manganèse, du chrome, du fer, du bore, du titane, du magnésium, du vanadium, du zirconium, du niobium, du molybdène, du tungstène, du cuivre, du zinc, du gallium, de l'indium, de l'étain, du lanthane, et du cérium contenu dans le liquide de traitement.

8. Procédé selon la revendication 7, dans lequel le pH du liquide de traitement est de 8 à 14.

9. Procédé selon la revendication 7, dans lequel le métal contenu dans le liquide de traitement est un métal qui peut former un ion présentant un rayon d'ion équivalent à de 70 à 120 % du rayon d'ion d'un ion lithium.

10. Procédé selon la revendication 7, dans lequel le liquide de traitement contient un ou deux ou plusieurs éléments choisis dans le groupe constitué du nickel, du cobalt, de l'aluminium, du manganèse, du chrome, du fer, du bore, du titane, du magnésium, du vanadium, du zirconium, du niobium, du molybdène, du tungstène, du cuivre, du zinc, du gallium, de l'indium, de l'étain, du lanthane, et du cérium.

**11.** Procédé selon la revendication 7, dans lequel le liquide de traitement est une solution qui dissout un nitrate et/ou un chlorure du métal.

**12.** Procédé selon la revendication 7, dans lequel dans l'étape de mise en contact de la matière active brute avec le liquide de traitement une quantité de lithium équivalente à de 0,1 à 10 % en mole du lithium contenu dans la matière active brute est éluée dans le liquide de traitement.

**13.** Procédé selon la revendication 7, dans lequel le liquide de traitement contient au moins un ion d'un métal choisi dans le groupe constitué de l'aluminium, du nickel, et du cobalt.

**14.** Composition contenant du lithium appropriée pour la matière active d'électrode positive d'une pile secondaire aux ions lithium, ladite composition satisfaisant les deux conditions suivantes :

(a) la composition de l'intérieur des particules primaires est représentée par la formule chimique (1) suivante :

$$Li_xNi_{1-y}M_yO_2 \qquad (1)$$

où M est un ou deux ou plusieurs éléments choisis dans le groupe constitué du cobalt, de l'aluminium, du manganèse, du chrome, du fer, du bore, du titane, du magnésium, et du vanadium,

$$0,6 \leq x \leq 1,2,$$

et

$$0 \leq y \leq 0,5 ;$$

et
(b) dans un intervalle d'au plus 0,02 $\mu$m en profondeur à partir de la surface externe des particules primaires, au moins 25 % en mole du lithium dans la composition représentée par la formule (1) ci-dessus sont remplacées par un ou deux ou plusieurs éléments choisis dans le groupe constitué du nickel, du cobalt, de l'aluminium, du manganèse, du chrome, du fer, du bore, du titane, du magnésium, et du vanadium.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2000203844 A
- JP 2001085006 A
- JP 2001273900 A
- EP 1195825 A